# EUROPEAN PATENT APPLICATION

(11) **EP 0 840 330 A1**
(43) Date of publication of application: **06.05.1998**
(21) Application number: 97308760.4
(22) Date of filing: 31.10.1997
(51) Int. Cl.: G21C 3/62

(54) **Segmented pellet and production thereof**

(30) Priority: 01.11.1996 US 742901
(71) Applicant: GENERAL ELECTRIC COMPANY, Schenectady, NY 12345 (US)
(72) Inventor: Dubecky, Mark Andrew, Wilmington, North Carolina 28412 (US); Patterson, Jr., Charles Beaty, Wilmington, North Carolina 28409 (US); Marlowe, Mickey Orville, Wilmington, North Carolina 28405 (US)
(74) Representative: Goode, Ian Roy

(57) **Abstract**

Process for preparing a segmented fuel pellet wherein a first powder charge (40) is compressed in a press (30) to form a first pellet segment (42), and a second powder charge (44) is compressed on top of the first pellet segment to form a second pellet segment (46) compression-bonded to the first pellet segment to form the green segmented pellet (48). Additional segments can be added as desired. Sintering of the segmented pellets produces sintered segmented pellets which exhibit reduced hour-glassing and meet diameter requirements with little or no grinding. In addition, reduced in-service hour-glassing is exhibited, which results in reduced local cladding strain. In-service hour-glassing can be pre-determined and controlled for each particular fuel design and application depending on the fuel rod diameter, power level to be achieved, and the pre-selected pellet segment length.

## Description

The present invention relates to segmented fuel pellets for use in nuclear reactors and to a process for preparing such pellets.

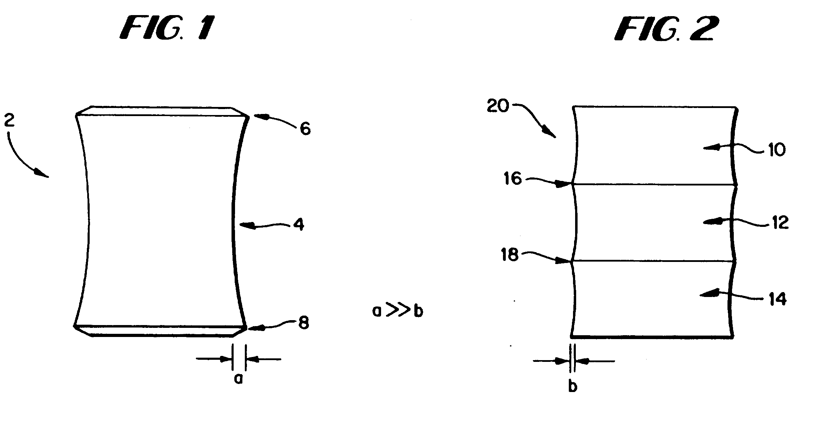

As is well-known, nuclear reactors, such as boiling water reactors (BWRs), pressurized water reactors (PWVRs), heavy water moderated reactors (CANDU), and fast reactors, utilize fuel rods loaded with uranium bearing fuel pellets. Such pellets are typically cylindrical in shape and are fabricated by compressing fuel powder in a die-press followed by sintering. However, a number of difficulties and limitations arise in the fabrication and use of conventional pellets. First, during sintering of the pellets, the phenomenon of "hour-glassing" occurs due to pressure and density gradients within the "green" powder compact. These pressure/density variations are caused by friction between the powder and the die-wall and within the powder itself during compaction in the press. The presence of a lower density in the middle of the powder compact than at the ends results in greater shrinkage in the middle region of the pellet as the material sinters. The result is a sintered pellet having an hour-glass shape as depicted in Figure 1, with diameter variations greater than the allowable design tolerances. To meet pellet diameter requirements for adequate heat transfer to the cladding and mechanical considerations, conventional sintered pellets exhibiting this hour-glassing must be ground to the desired final cylindrical shape to be economically used as fuel rods for a reactor. Such a grinding step adds to production time and costs, reduces overall product yield and creates hazardous waste dust.

An additional difficulty which arises with respect to pellets produced by conventional sintering and grinding techniques is that, during service in the fuel rods, further hour-glassing occurs as the cylindrical pellets are brought to power in the reactor. This in-service hour-glassing exacerbates local cladding strain at pellet-pellet interfaces on the inner surface of the cladding and contributes to the phenomenon of Pellet-Clad Interaction (PCI) failures. In-service hour-glassing arises because of the generation of a parabolic temperature profile within the pellet with the hottest location at the center and the coolest at the surface. As the center of the pellet tries to expand more than the surface, significant stresses are developed in the pellet and fracturing occurs. The pellets tend to crack both radially into several "pie-shaped" portions, and transversely at about the pellet mid-height. The extent of cracking depends on the pellet dimensions, power level, and exposure. The cracked portions undergo axial bowing and have an appearance somewhat like a banana which produces the hour-glass shape in the pellet. Such in-service hour-glassing is the result of unavoidable temperature distribution within the pellets, and occurs even if the asmanufactured pellets are in the form of perfect cylinders with uniform bulk density throughout.

One of the principal dimensional factors affecting in-service hour-glassing is the length/diameter (L/D) ratio of the pellets. Longer pellets are desirable from a productivity standpoint in that fewer pellets are required, but larger L/D ratios increase local cladding strain at pellet-pellet interfaces and reduce resistance to PCI fuel failures. Shorter pellets produce less hour-glassing, but PCI is not completely avoided by using short pellets.

A further difficulty is that of pellet chipping which occurs primarily at the ends of the pellets. Lost uranium bearing fuel material as a result of this chipping reduces the rod and assembly uranium content and therefore decreases the power and energy generation capability of the fuel rod and assembly.

A need exists therefore for an improved approach to pellet fabrication to reduce or eliminate the need for post-sintering grinding and to reduce in-service hour-glassing to thereby minimize local cladding strain and risk of PCI failures. The present invention seeks to provide solutions to those needs.

In accordance with a first aspect of the present invention, there is provided a process for preparing a segmented fuel pellet suitable for use in nuclear reactors. According to the process, a first powder charge is introduced info the compression zone of a pelletizing die and compressed in a first pressing step to form a first pellet segment. A second powder charge, which may be the same powder as that initially introduced or a different powder, is then introduced into the compression zone and into contact with the first pellet segment, and the second charge is compressed in contact with the first pellet segment, to form a segmented green pellet comprising the first and second pellet segments in intimate contact and compression-bonded to each other. If desired, the process can be continued by introducing further quantities of selected powder into the compression zone and performing the compression step to form a multi-layered segmented pellet comprising a plurality of segments compression-bonded to each other.

The segmented pellet so produced is then sintered using conventional techniques known to persons of ordinary skill in this art. For example, for uranium dioxide, sintering is typically carried out at about 1700°C for a few hours in a hydrogen-containing atmosphere. A significant portion of the interface between segments sinters to provide a sufficient bond for pellet handling and loading into the fuel rod.

In accordance with a further aspect, the invention provides a green segmented pellet comprising at least two pellet segments each comprising a compressed powder, the segments being compression-bonded to each other and being sinterable to produce a sintered pellet which is substantially non-hour-glassed.

In another aspect, the process of the invention includes the further step of sintering the segmented fuel pellet to produce a sintered segmented fuel pellet where a significant portion of the interface between said segments sinters to provide a sinter bond of sufficient strength to permit pellet handling and loading into the fuel rod.

According to another aspect of the invention, there is provided a sintered segmented pellet comprising at least two pellet segments sintered to each other which is substantially non-hour-glassed.

In accordance with another aspect, the present invention provides segmented fuel pellets with predetermined transverse planes of fracture at the interfaces of the pellet segments. The pellet segment lengths are pre-designed to minimize the in-service mechanical interaction of the pellets with the fuel cladding for the particular fuel-cladding geometry and intended service-duty application.

In accordance with a yet further aspect of the present invention, there is provided a fuel rod loaded with one or more sintered segmented pellets of the present invention.

In accordance with an additional aspect, the present invention provides an assembly, or bundle, or group of fuel rods sharing common handling and positioning hardware with at least one sintered segmented fuel pellet of the present invention.

In accordance with yet another aspect, the present invention provides a nuclear reactor including at least one fuel assembly with at least one fuel rod loaded with at least one sintered segmented fuel pellet of the invention.

The term "compression-bonded" as used herein means that sufficient pressure is applied to the second (and optionally subsequently added) powder charge while pressing to cause the second pellet segment to come into intimate contact with the first pellet segment and to cause the first and second pellet segments to adhere to each other with sufficient strength such that the resulting green segmented pellet remains intact and the individual pellet segments do not separate from each other when the green segmented pellet is removed from the press and sintered.

The term "sintered" or "sintering" as used herein means heating the as-pressed (green) compacted segmented pellet to a temperature sufficient to substantially coalesce the powder into a single mass without liquefying the mass, and is well known to those skilled in the art. It is recognized that during sintering, partial separation of the individual pellet segments may occur at the interfaces between segments, but complete separation does not occur during sintering. The bonding that occurs between segments as a result of sintering provides sufficient strength for pellet handling and loading into the fuel rod without the segments separating completely from each other.

By the term "substantially non-hour-glassed" is meant that, upon sintering of the segmented pellet, the segmented pellet assumes an overall cylindrical shape which requires little or no further machining or grinding to bring the diameter of the segmented pellet within required design tolerances for use in a fuel rod of a nuclear reactor. It is understood that some minimal amount of hour-glassing or non-uniformity of diameter may be present in the individual segments of the sintered segmented pellet or in the overall-composite pellet made up of at least two segments. Such minimal hour-glassing or non-uniformity of the diameter is decidedly less than would result from pellets produced by conventional single die-filling and pressing techniques, and can be so low as to permit their use in fuel rods for nuclear reactors without subsequent grinding.

The term "significant portion" as used herein in relation to an extent by which the interface between the segments sinters means that amount of sintering which results in bonding between the segments to allow the sintered segmented pellet to be nandled and loaded into the fuel rods without the segmented pellets completely separating along the interface(s) into sub-pellets. Generally the extent of bonding will be at least about 20% bonding by sintering along the interface, more usually about 40-60% bonding along the interface by area.

The invention enjoys numerous advantages over conventional pellet production processes and over conventional fuel rod and pellet designs. First, the extent of hour-glassing which occurs during sintering of the segmented pellets of the invention is significantly less than observed with single non-segmented pellets of the same or similar dimensions. Figure 2, discussed in more detail below, depicts schematically the location and relative extent of hour-glassing that occurs for a segmented pellet of the invention compared with that for a conventional pellet, shown in Figure 1. The substantially non-hour-glassed segmented pellets of the invention are essentially cylindrical in shape and within design tolerances, and require little or no machining or grinding to render them acceptable for reactor use.

Moreover, the segmented pellets of the invention can be designed for markedly reduced in-service hour-glassing. Once loaded into the fuel rods, brought to operating power and stressed thermally, the segmented pellets fracture along the pre-determined fracture planes corresponding to the line of division between each pellet segment created during pressing. Thus, for example, a segmented pellet comprising four segments, when placed in the reactor and brought to power, will shear in up to four mini-pellets, with separations at the locations of the interfaces of the as-pressed pellet segments.

For a particular nuclear fuel rod design and operational conditions (e.g., linear heat generation rate and reactor coolant conditions), the L/D ratios of the individual pellet segments can be designed to produce acceptably low pellet-clad mechanical interaction at the pellet segment interfaces. The extent of hour-glassing for a particular rod configuration and application may be determined as a function of L/D ratio by coupled thermal stress/strain distribution analyses (for example by finite element methods), as is well known in the art. Iterative analyses may be performed according to known methods to determine the L/D ratio required to limit pellet-clad interaction and cladding strain to acceptable levels.

A further advantage associated with the use of the segmented pellets of the invention arises from the fact that hydrogen, from waterside corrosion of the fuel cladding or from internal sources of hydrogen in the fuel rod, accumulates in the cladding at pellet-pellet interface locations during extended reactor service. The hydrogen concentrates at the pellet-pellet interfaces as a result of thermal migration of the hydrogen to the cooler (lower heat flux) regions between pellets. Because of the low L/D ratio of the mini-pellets produced due to fragmentation of the segmented pellets and the resulting larger number of effective pellet interfaces, the concentration of hydrogen is reduced at each interface. Since hydrogen embrittlement of the cladding material is proportional to local hydrogen concentration, the adverse effects of the hydrogen pickup in cladding are significantly reduced by the presence of mini-pellets as compared to that obtained with the use of conventional pellets.

A yet further advantage associated with the segmented pellets of the invention is the ability to modify the composition of each pellet segment in accordance with design requirements. The process of the invention allows for flexibility with respect to the composition of individual pellet segments within the segmented pellet. For example, some pellet segments may include powders containing Gd, Er or Pu, or combinations thereof, and others not.

A further advantage of the segmented pellets is the ability to produce longer composite pellets than the single-pressed pellets that are conventionally used, without increasing pellet-cladding mechanical interaction.

The reduction in the overall number of composite pellets per fuel rod reduces handling and inspection costs. In addition, fewer pellet-pellet interfaces and pellet end chamfers, dishes, and enrichment or identification marks are present in the rod length of fuel. This reduces the material loss due to those pellet end features, and thereby allows a greater amount of fuel material to be placed in each rod.

There is a potential disadvantage of greater variability in fuel pellet column length or fuel pellet type zone lengths arising from longer composite pellets. However that disadvantage can be easily overcome, and pellet column or zone length variability reduced from standard practice, by using single segment pellets created for use at the end of the fuel column or pellet zone, thereby permitting closer control of fuel pellet column length or pellet type zone length, and allowing improved nuclear designs.

A still further advantage of the present invention is markedly reduced pellet chipping. Reduced pellet chipping arises from the reduced number of pellet ends with longer composite pellets and from improved mechanical integrity of the pellet segments. Chipping of pellets due to handling and rod loading, primarily occurs at pellet ends, and arises from impact loading at points of contact between individual pellets and between the pellets and handling hardware. Longer composite pellets reduce the number of pellet ends, and therefore reduce the opportunities for pellet chip generation on impact of pellets.

With the segmented pellets, a reduction in the density gradients in the individual pellet segments during pressing, and reduction in differential shrinkage between the various portions of the pellets during sintering process is achieved. This uniformity in density and shrinkage provides pellets with greater uniformity in properties, and higher overall strength, which contribute to improved resistance to breakage and chipping during handling and fuel rod loading. As a result, the segmented pellets result in higher manufacturing yields of sound pellets. There is also a reduced loss of fuel material from the fuel pellet column due to chipping, and an improvement in fuel power and energy generation capability compared to standard pellets with greater amounts of fuel chipping. In addition, with the longer composite pellets of the present invention and fewer pellet-pellet interfaces in a fuel rod, fewer opportunities arise where chipping can occur further enhancing the reduction in material loss and loss of power and energy generation capability from the fuel rods, and assemblies.

The segmented pellets of the present invention therefore offer the design and manufacturing advantages of predetermined pellet fracture planes at the pellet segment ends and low, controlled in-service hour glassing with decreased pellet-cladding mechanical interaction, reduced hour-glassing of as-sintered pellets and a reduction of the extent or need for post-sintering grinding of pellets, improved pellet integrity and reduced loss of material due to pellet chipping, and reduced pellet handling from use of longer composite pellets.

The invention will now be described in more detail with reference to the accompanying drawings, in which:
Figure 1 shows schematically a conventional sintered pellet exhibiting hour-glassing;
Figure 2 shows schematically hour-glassing exhibited by a segmented pellet of the present invention;
Figure 3 shows a production cycle for fabrication of a segmented pellet in accordance with the present invention;
Figure 4 shows schematically a pressure/density profile for a pellet produced according to conventional techniques;
Figure 5 shows the pressure/density profile for a segmented pellet according to the present invention;
Figures 6a and 6b show the effect on the segmented pellet under hot operating conditions in a fuel rod for a nuclear reactor;
Figure 7 shows schematically a partially cutaway perspective view of a conventional BWR;
Figure 8 shows a plot of Diameter against Position Index (proportional to length along pellet) for 5-segment pellets of the invention.

Referring to Figure 1, there is shown schematically a conventional sintered pellet 2 exhibiting hour-glassing in the middle region 4. The pellet possesses chamfered regions 6 and 8 at the top and bottom of the pellet. The distance "a" (the difference between the maximum diameter of the pellet at the maximum diameter and the minimum diameter at the reduced middle region 4) is typically of the order of 0.5 to 2% of the overall diameter of the pellet. The increased gap between pellets and cladding due to hour-glassing of conventional pellets in the as-sintered state limits heat transfer between the pellet and cladding and exceeds normal pellet diameter variability tolerances, necessitating grinding of the pellet to make the pellet more cylindrical.

It will be seen from Figure 2 that the sintered segmented pellet 20 of the invention has an overall substantially cylindrical shape, and requires little or no machining or grinding to render the pellet ready for use. The green segmented pellets of the invention are compression-bonded to each other, as described in more detail below, such that following compaction and sintering, the individual pellet segments remain intact and do not separate from each other along the division lines 16, 18 prior to use.

It will be understood that the sintered segmented pellet illustrated in Figure 2 constitutes one of many possible embodiments within the scope of the present invention. Thus, the sintered segmented pellet of the invention may comprise as few as two pellet segments sintered together, or as many as 6 to 8 pellet segments The length of the individual pellet segments 10, 12, 14 will be pre-determined and designed according to the diameter of the fuel rod employed and the linear heat generation rate or power level to which the fuel rod will be subjected during service. The individual pellet segment length will be pre-determined to suitably limit the in-service hour-glassing of the pellet segments and the potential strain imposed on the fuel cladding at the pellet-segment interfaces.

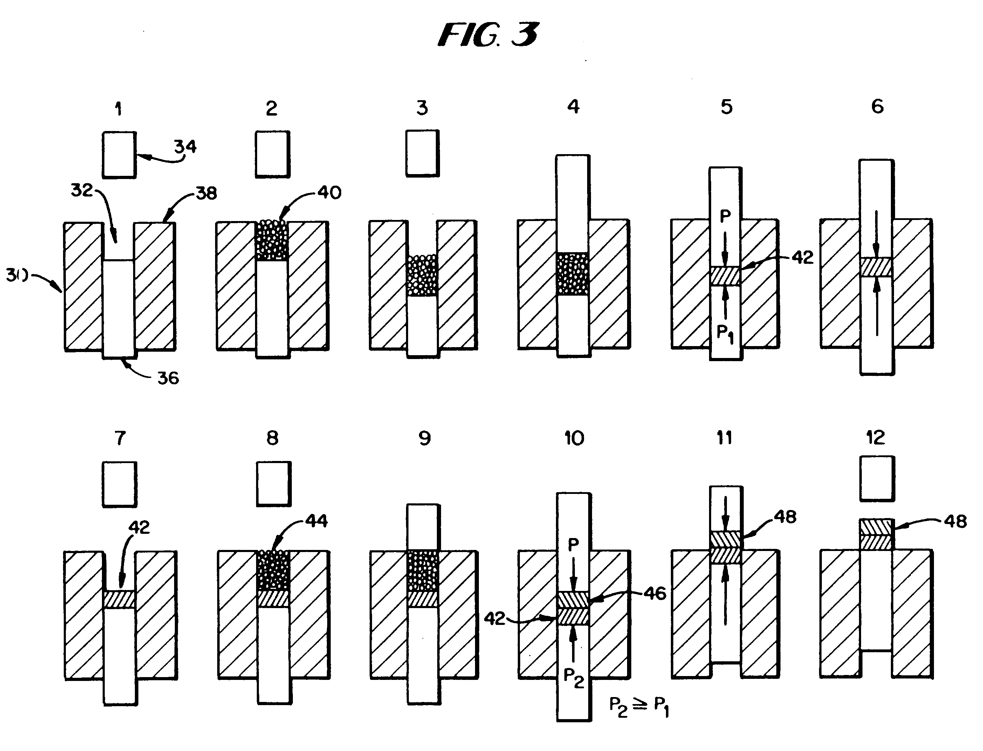

The process of fabricating segmented pellets of the invention is illustrated in Figure 3. Stage 1 shows schematically a compression apparatus 30 having a compression zone in the form of a die cavity 32, a top punch 34, a bottom punch 36 and a die housing 38. The top and bottom punches are movable towards and away from each other within the cavity 32. Typically, the compression apparatus is a double-acting uni-axial press. This can be either a single or multi-cavity hydraulic system or a rotary multi-station arrangement. Such pellet pressing apparatuses are commercially available, and their operation is well-known to persons of ordinary skill in the art of pellet fabrication.

At Stage 2, a powder charge 40 is introduced into the die cavity 32 above the bottom punch 36. The amount of powder and the depth of fill of the cavity depend on the powder compaction ratio (the ratio of pellet green density to powder density) and the desired L/D ratio for each segment. The L/D ratio for each pellet segment is pre-selected to minimize hour-glassing and pellet-cladding interactions. The L/D ratio for each pellet segment can range from about 1:10 to 1:1. More usually, the L/D ratio for each segment ranges from 1:4 to 1:2. It will be noted that the amount of powder introduced (Stage 2) can be controlled by appropriate positioning of the bottom punch in the cavity as shown in Stage 1.

The bottom punch may then be lowered, repositioning the powder deeper into the cavity (Stage 3). This step is termed "underfill" and is not necessary for making segmented pellets. The top punch 34 is then brought into contact with the powder 40 (Stage 4) and the powder is compressed (Stage 5) by application of pressure by both punches to form a compressed segment 42. Typically, the pressure (P) applied by the top punch and the pressure (P₁) applied by the bottom punch in this stage is about the same and is in the region of about 20-70 ksi, for example about 40-60 ksi.

The compressed pellet segment 42 is then repositioned within the die (Stage 6). Both punches are moved upwardly while at the same time exerting a hold-down pressure (if needed) on the segment to maintain the integrity of the compressed powder segment as it is moved upwardly in the die cavity. The hold-down pressure applied during repositioning or ejection is lower than the pressure exerted by the top punch during the segment forming step (Stage 5), but can be as high as 80% of this pressure. The higher bottom punch pressure compensates for frictional forces between the existing pellet segment and the die wall surface.

The top punch is withdrawn to expose a cavity 32 with the compressed pellet segment 42 located therein (Stage 7). A second powder charge 44 is then introduced into the die cavity 32 (Stage 8). In this stage, the bottom punch is positioned such that the volume of open cavity above the compressed segment 42 is such that when filled and compressed, the desired L/D ratio for the second segment is obtained.

The top punch 34 is again lowered into the cavity (Stage 9) to compress the second charge and produce a second compressed pellet segment 46 in intimate contact with the first pellet segment 42 (Stage 10). In Stage 10, the pressure P₂ required at the bottom punch may be greater than the pressure P₁ of the bottom punch employed in the formation of the first compressed pellet segment. The higher bottom punch pressure compensates for frictional forces between the existing pellet segment and the die wall surface. In this way, the first and second compressed pellet segments 42, 46 are compression-bonded to one another.

The resulting compressed segmented green pellet 48 comprising two pellet segments is then repositioned upwardly within the die (Stage 11), with a hold-down pressure (if needed to assure pellet integrity upon ejection) being exerted by the top punch during movement of the segmented pellet. The top punch is then withdrawn leaving the exposed green segmented pellet 48 (Stage 12) which is removed and subjected to sintering, according to conventional techniques.

The process specifically described above relates to the fabrication of a segmented pellet with two-pellet segments. It will be appreciated, however, that the present process is not limited to two-pellet segments, and additional pellet segments may be formed by following the same procedure to build up a multi-segmented pellet of the desired composition and length. For example, the process of the invention can be used to control the Gd₂O₃ content by selecting the number of segments that contain gadolinia powder. As an example, a standard powder of 6% Gd₂O₃ - UO₂ in a three segment pellet system could be used to make 2%, 4%, or 6% segments depending on the number of segments which contain the gadolinia-bearing powder. Using a standardized powder of a specific Gd₂O₃ concentration such as that exemplified above simplifies the manufacturing process greatly. Other possible combinations include: UO₂-PuO₂ segments, UO₂-ThO₂ segments, UO₂-U₃O₈segments, segments with variable density, segments with variable amounts of processing aids and lubricants, such as Al₂O_{3,} zinc stearate, and various waxes, segments with different uranium isotopic concentrations, or combinations of the above, for example UP₂ +Gd₂O₃ + PuO₂ + zinc stearate. A lubricant such as zinc stearate or Acrawax is generally employed in the process, typically by addition to the powder itself or by application to the die walls. However, a lubricant is not essential, and is it is possible to omit the lubricant, if desired.

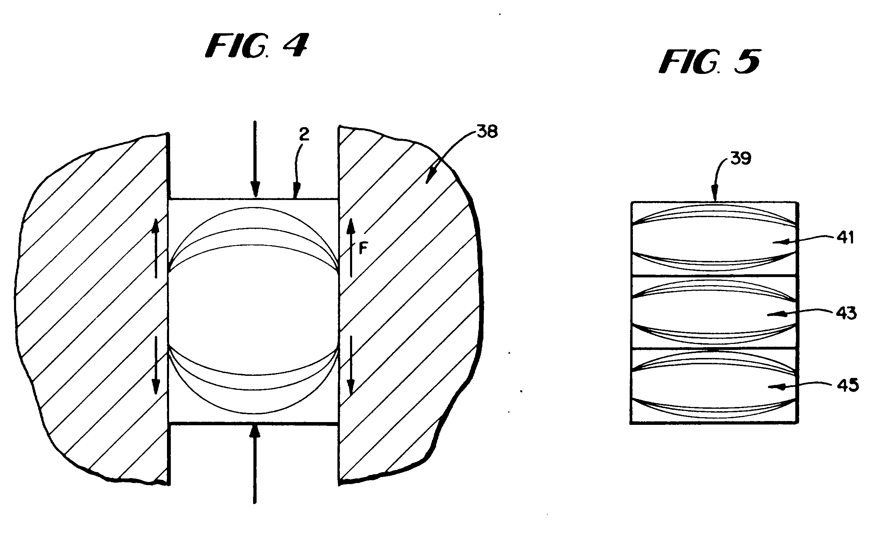

Figure 4 depicts schematically the density variations (shown by different shadings) which arise within a conventional green pellet 2 due to friction F between the outer surface of the pellet and the die 38. The darkest regions represent those which experience the greatest pressure, thus achieving the highest green density. As a pressure gradient develops from the ends (shown dark) to the center (shown light) of the pellet, a corresponding green density gradient is created. Upon sintering of the pellet, more shrinkage associated with a greater density increase occurs in the center of the pellet. Thus, the pellet diameter reduction is greatest in the center region, producing the hour-glassed pellet shape. It is this type of density variation which gives rise to the hour-glassing phenomenon in the as-sintered pellets depicted in Figure 1. The frictional force variation and hence the density variation within a green pellet decreases with smaller L/D ratios. By reducing the L/D ratio as in the present invention, the powder motion along the die wall surface is reduced. As a result, frictional forces between the powder and die wall are also reduced, as are variations in density within each segment. However, the overall density variation within the segmented pellet is small enough so that, when sintered, pellet diameter requirements can be met with little or no machining or grinding.

Figure 5 shows density variations in a green segmented pellet 39 produced in accordance with the process of the present invention. The density variations are much less, and this results in significantly reduced hour-glassing, as illustrated in Figure 2. Figure 5 shows a three segment pellet with L/D segments of nearly 1/2. As is depicted, three smaller pressure gradients develop in the three green pellet segments 41, 43, 45 than the one pressure gradient shown in Figure 4 for the conventional pellet with an L/D of 4/3. This results in three small hour-glass shapes after sintering, and the total diameter variation is significantly less in the segmented pellet than in the single-pressed conventional pellet of the same overall dimensions.

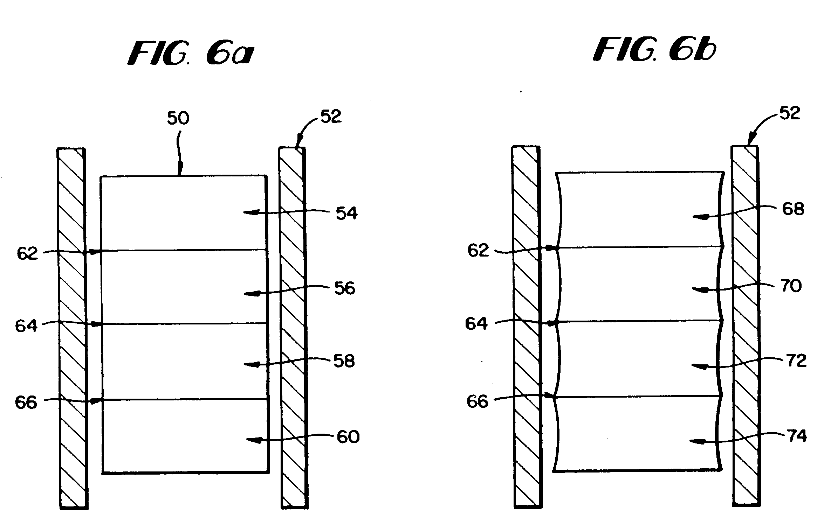

Figures 6a and 6b illustrate the in-reactor performance of a four-segment pellet during hot operating conditions in a fuel rod 52 of a nuclear reactor. Prior to being exposed in service, all four pellet segments 54, 56, 58, 60 are sintered to produce a sintered segmented pellet (Figure 6a) which may be partially fractured along the division lines 62, 64, 66, created during each pressing step, but still sufficiently bonded that the sintered pellets can be handled and loaded into the fuel rods without separating into sub-pellets. Once brought to power and thermally stressed in service within the fuel rod, the pellets fracture completely along the division lines 62, 64, 66 (Figure 6b). As a result, a pellet made up of four segments, when placed in the reactor, shears into four sub-pellets 68, 70, 72, 74, each exhibiting minimal in-service hour-glassing. With smaller L/D ratios than conventional pellets, the sub-pellets hourglass less in service and reduce local cladding strain.

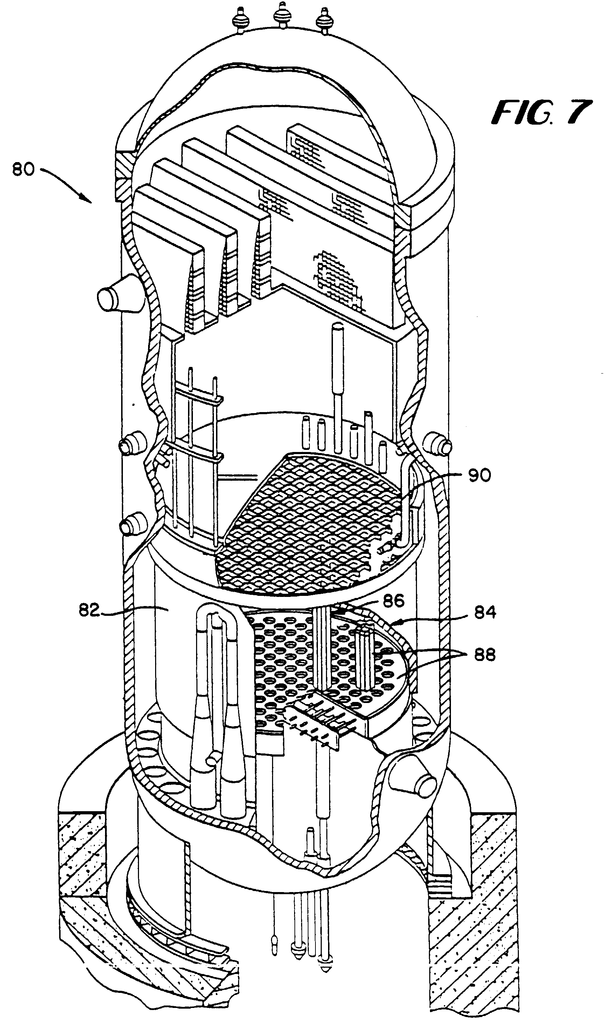

Figure 7 shows schematically a conventional boiling water reactor. As indicated above, the segmented pellets of the present invention can be used in other types of nuclear reactor, not just BWRs. Thus, the invention may be used in pressurized water reactors (PWRs), heavy water moderated reactors (CANDU), and fast reactors. The structure and operation of a reactor such as that illustrated in Figure 7 are well known to persons skilled in the art and need not be described in detail. The following description is presented insofar as it applies to the present invention.

The reactor, generally referenced 80, includes a core shroud 82 which is a stainless steel cylinder surrounding the core 84 comprising numerous fuel assemblies or bundles or groups 86 of fuel rods 88 (only two 2 x 2 arrays are depicted in Figure 7). The assemblies 86 of fuel rods share common handling and positioning hardware, which includes a top guide 90 at the top and a core plate 92 at the bottom. At least one of the fuel rods 88 is loaded with at least one sintered segmented fuel pellet of the present invention.

The extent of hour-glassing affects the extent of mechanical interaction between the pellet and the cladding at pellet-pellet interfaces. As noted earlier, the pellet L/D ratio affects the extent of in-service hour-glassing. Smaller L/D pellets will hour-glass less in service, thus extending the time until pellet-clad contact and decreasing the extent of local cladding strain. Also, smaller L/D ratios decrease the magnitude and marginal rate (i.e. the incremental cladding strain per unit increase in fuel rod power; LHGR = linear heat generation rate, e.g., kw/ft of fuel rod) of cladding strain at pellet-pellet interfaces in addition to delaying the onset of hard pellet-clad mechanical interaction.

The segmented pellets produced according to the present invention are intended for use in any nuclear fuel application. The segmented pellets can be used in nuclear fuel rod assemblies employed in any type nuclear reactor, such as for example BWR, PWR, CANDU, and any other types of nuclear reactors that utilize cylindrical ceramic fuel pellets.

### EXAMPLE

The invention will now be further illustrated by way of the following comparative example.

Comparative tests were performed using both UO₂ and Al₂O₃ as a substitute for UO₂ to show the effect obtained according to the present invention as compared to that obtained with conventional non-segmented pellets. A single action press was employed to fabricate the pellets, which resulted in no pressure being applied by the bottom punch. As a result, the density of the green compressed segment decreases toward the bottom of each segment and a taper develops while sintering. Nonetheless, important elements of the segmented pellet concept are illustrated by this test.

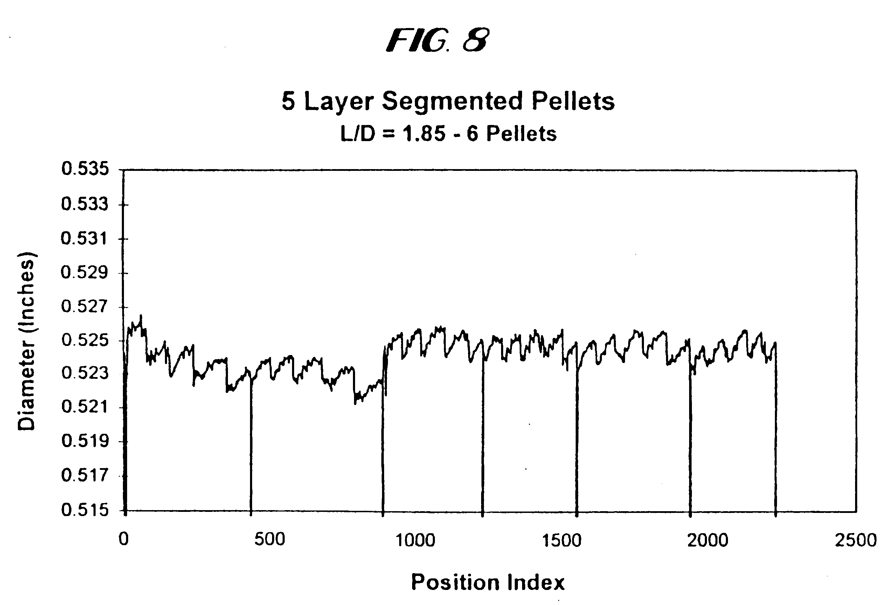

The results from the Al₂O₃ tests are shown in Figure 7, and clearly demonstrate the advantages realized by the invention. Figure 8 shows the diameter vs. position index (proportional to distance along the pellet length) for six 5-segment pellets. Since each pellet was made up of five segments, five tapers are actually observed. The taper for each segment of these long segmented pellets (L/D = 1.85) after sintering is about 2 mils.

By comparison, conventional pellets having an L/D ratio of 1.0 were made and have tapers after sintering of 6 mils. Thus, for a single-pressed pellet with an L/D of 1.85, a taper of 11 mils would be expected, as opposed to the 2 mil diameter variation seen in the comparable segmented pellet.

## Claims

1. A process for preparing a segmented fuel pellet, said process comprising the steps of:
introducing a first powder charge to be compressed into a compression zone;
compressing said first charge to form a first pellet segment;
introducing a second powder charge into said compression zone and into contact with said first pellet segment;
compressing said second charge to form a second pellet segment compression-bonded to said first pellet segment along an interface to form a segmented fuel pellet; and
removing said segmented fuel pellet from said compression zone.

2. A process according to claim 1, and further including the step of sintering said segmented fuel pellet to produce a sintered segmented fuel pellet where at least a significant portion of the interface between said segments sinters to provide a sinter bond to permit pellet handling and loading into the fuel rod.

3. A process according to claim 2 wherein said sintering is carried out such that said sintered segmented fuel pellet during use undergoes fracturing at at least one interface thereof during in-service irradiation to form sub-pellets having a preselected length/diameter ratio to minimize pellet-clad interactions.

4. A process according to claim 1, wherein said first charge is the same powder as said second charge, or wherein said first charge is a different powder than that of said second charge.

5. A process according to claim 1, wherein said first pellet segment, after formation and prior to introduction of said second charge into said compression zone, is repositioned in said compression zone to create a cavity in said zone for receipt of said second charge.

6. A process according to claim 1, wherein the length/diameter ratio for each pellet segment is pre-selected to minimize hour-glassing and pellet-clad interactions.

7. A process according to claim 1, wherein the length/diameter ratio for each pellet segment ranges from about 1:4 to 1:2.

8. A process according to claim 1, wherein said first charge is compressed at a pressure in the region of 20-70 ksi, and said second charge is compressed at a pressure in the region of 20-70 ksi to form said second pellet segment compression-bonded to said first pellet segment.

9. A non-sintered segmented pellet comprising at least two pellet segments each comprising a compressed powder, said pellet segments being compression-bonded to each other and being sinterable to produce a sintered substantially non-hour-glassed segmented fuel pellet.

10. A sintered segmented fuel pellet comprising at least two sintered pellet segments which are sintered to each other along an interface thereof and which is substantially non-hour-glassed.
